# EUROPEAN PATENT APPLICATION

(11) **EP 4 231 392 A1**
(43) Date of publication of application: **23.08.2023**
(21) Application number: 22157422.1
(22) Date of filing: 18.02.2022
(51) Int. Cl.: H01M 4/74, H01M 4/134, H01M 4/1395

(54) **LITHIUM METAL HOST ANODE**

(71) Applicant: Theion GmbH, 12487 Berlin (DE)
(72) Inventor: SLAVIK, Marek, 12487 Berlin (DE); MARTIN, Andréa Joris Quentin, 12487 Berlin (DE); PEHL, Thomas, 12487 Berlin (DE); PUGET, Marin, 12487 Berlin (DE); KUMAR, Pushpendra, 12487 Berlin (DE)
(74) Representative: Paustian & Partner Patentanwälte mbB

(57) **Abstract**

The present invention relates to a negative alkali and alkaline earth metal electrode - the anode has the form of a monolithic body comprising a stacking of 3 - 200 mats, preferably 80 mats, of interlaced carbonized polyacrylonitrile (PAN) fibers.

## Description

This patent is directed to a host anode according to claim 1 as well as to a battery with such host anode according to claim 6. In a preferred embodiment production and functionalization of heterogeneous mats of polyacrylonitrile (PAN) nanofibers into a monolithic structure utilizing an innovative flash way to sulfurize the latter via microwave irradiations is aspired.

The worldwide demand in terms of energy storage is growing exponentially due to the current technical and electronic development. The emergence and ongoing popularization of electric cars as well as the miniaturization and modernization of portable devices require battery systems with higher energy capacity and improved lifetime.

The actual challenges originated from the users of battery-powered electric vehicles (BEV) requesting a much higher operation radius on a single charge. Simultaneously, a short charging time is desired, defined here as ≤ 30min from 15% SoC to 100% SoC (State of Charge) with a negligible negative effect on the cycle life defined as SoH (state of health). The SoH indicates the ratio of the current maximum usable capacity to the nominal capacity.

From WO 2016/113100 A1 a lithium sulfur accumulator is known with a sulfur cathode that is made in the form of a single layer PAN fleece with PAN-Sulfur particles. Sulfur is the active compound of the disclosed cathode.

WO2018/006557 teaches a cathode based on a porous carbon nanofiber/FesC single layer composite that is infiltrated with sulfur as the active electrode material.

Li-ion batteries with high cycle life and high charge rate acceptance are in direct conflict, at least, with the present types of alkali-ion anodes which are mostly based on Li⁺ intercalation into graphite. This slow Li⁺ diffusion during intercalation into graphite framework together with the presence of a concentration polarization gradient will further restrict the accessibility of Li+. In fact, it will hamper the transport rate of Li+ from the electrolyte to anode which then exceeds Li diffusion-intercalation rate and induce accumulation of more charge carriers on the anode surface and drive the anode potential below 0 V. This is the potential area for which lithium plating is kinetically more favorable than Li+ intercalation reactions and as the working potential of graphite is close to 0.1V a metallic Li deposition occurs resulting in cell degradation and safety issues.

The desired properties sought for those kinds of energy storage devices are high gravimetric energy (Wh*kg⁻¹) or high volumetric energy (Wh*L⁻¹). Both characteristics are important to create batteries that take a minimum amount of space while retaining minimum weight. Although the emphasis is often on gravimetric energy, volumetric energy is more important because of the limited space in which apparatuses the batteries are used. Regarding the anode part, it should therefore be a material with a low density but with both a high volumetric capacity (mAh.cm⁻³) balanced with the cathode part and specific (mAh.g⁻¹) capacities. For this purpose, porous anodes that can accommodate Li are very interesting such as silicon (8334 mAh.cm⁻³) or common graphite (837 mAh.cm⁻³). Nevertheless, as mentioned above, they often face some detrimental issues such as the creation of dendritic Li systems or defective solid electrolyte interphase (SEI) layer. To get rid of those problems and imperfections, the design of a porous host structure with lithiophilic groups and a heterogenous mat disposition is very promising. The latter will allow the gradient deposition of Li and suppress the lithium dendrites formation and the clogging of the SEI. Besides these properties, an environment-friendly synthesis is highly preferred as a low-cost efficiency manufacturing for integrating lithium in this kind of anode in battery devices.

Even if such an anode is expected to be very efficient, some parameters need to be optimized and challenges need to be overcome to reach the synthesis of this kind of material and its use e.g. in Li-S battery. Here, we summarize every issue that needs to be addressed and present them by their order of importance - No.1 being the most difficult one.

Developing high-energy batteries is imperative to fulfill the exponentially increasing energy requirements for consumer electronics and electric vehicles. The power and energy density of rechargeable batteries is primarily limited by the capacity of electrodes materials. The current state-of-the-art rechargeable battery technology is based on graphite anodes (theoretical specific capacity of ~372 mAh.g⁻¹) that have almost reached their theoretical limit. Rechargeable batteries with promising theoretical capacity (especially alkali-metal-free cathodes, i.e., sulfur) have recently attracted tremendous attention. To pair with these high-capacity cathodes, the pursuit of potential alkali-metal anodes is becoming necessary for developing next-generation high-energy batteries. Alkali metals (e.g., Li, Na and K) are considered the most promising anodes for next-generation high-energy batteries due to their superior specific capacities. Among alternatives, metallic Li with minimum ionic radius (0.76 Å), density (0.53 g.cm⁻³), redox potential (-3.040 V vs standard hydrogen electrode (SHE)), and highest theoretical specific capacity (~3860 mAh.g⁻¹) possesses tremendous potential as an ideal negative electrode for high energy rechargeable batteries. Even though the specific capacity and electrochemical potential of Na and K are inferior, their high abundance and low cost make them a promising alternative as battery anode active material. However, the practical applications of alkali metal anodes (Li, Na, and K) are severely hampered due to their high reactivity, uneven metallic deposition (generally referred to as dendritic growth, causing safety concerns and sometimes battery failure), unstable solid electrolyte interphase (SEI) (resulting in low coulombic efficiency), significant volume changes during cycling, and therefore short lifetime. During the battery operation, the electrodeposition of alkali-metal anode (metallic Li, for instance) is affected by several factors such as salt concentration in electrolyte media, applied current density, temperature, pressure, SEI, and ionic transport. Furthermore, the spontaneous reactions between alkali metal anodes (for example, Li-metal) and electrolytes result in the formation of the SEI layer, which plays a critical role in stable cycling. Based on the observations, the morphologies of the electrodeposited alkali-metal anode are grouped in six different classes **(i) Whiskers** or needle-like structure: primarily originating from/on the anode surface, generally long and thin structures (width ~1 µm and lengths ranging from 10 to 100 µm). **(ii) Mossy** structure: mossy structure generally represented as solidly interconnected pebbles with electrolyte filling gaps and pores. **(iii) Dendrites:** Dendrites are thin-branched, fractal objects that originated from an anode surface. **(iv) The globules:** The globules are found in confined regions, unlike whiskers, mosses and dendrites, which tend to form across the entire electrode. **(v) Tree-like structure:** originating from the electrode. **(vi) Cracks:** metal deposition on grain boundaries in the case of sol-id/ceramic electrolytes resulting in cracking of the solid electrolyte and SEI. A detailed understanding of the nucleation and growth behaviors of alkali metals during battery operation (cycling) is the key factor to suppress the dendrite growth and achieve safer and longer battery life. Some theoretical models, including thermodynamic, space-charge, stress and inelastic deformation, film growth, and phase-field kinetics models have been established to explain the mechanism of undesirable dendritic growth. Based on the theoretical model, several efficient strategies to suppress dendritic growth and to protect the alkali metal anode, including non-aqueous electrolyte additives, solid-state electrolytes, artificial solid electrolyte interphase (SEI), the introduction of three-dimensional (3D) host materials, micro- and/or nano structuring of alkali metal anodes, structural modification of current collectors, and separator modification have been proposed.

The volume change of the alkali metals anodes during battery operation (plating/stripping) is unexpectedly high, resulting in severe damage to the SEI and poor battery performances. The introduction of a stable host was proposed as an efficient approach to address the infinite volume change and suppress the uninvited dendritic formation. An ideal host should inherit the following properties: (1) superior wettability with alkali metal, (2) higher surface area to reduce the local current density, and (3) good compatibility with the electrodes and electrolytes to avoid parasitic side reactions. Several carbon materials including, carbon nanotubes, graphene, carbon nanotubes-graphene composite, and carbon nanofibers (CNFs) are suggested as preferred hosts to control alkali metal deposition during battery operation. A 3D carbon framework offering larger volume and surface area is more efficiently capable of accommodating the electrodeposited alkali metals than a two-dimensional (2D) structure. However, the real-time operation of the composite anodes is limited to operate below 5 mA.cm⁻²; whereas higher current densities will result in severer capacity fading and instability of electrodes. Fast charging/discharging with a current density higher than 10 mA.cm⁻² is the primary requirement for high-performance rechargeable batteries, especially for electric vehicles. In short, the host matrix for plating and striping alkali metal anode during battery operation plays a crucial role in alleviating volume change, suppressing the dendrite growth, and improving the stability of alkali metal anodes to obtain high energy density. A 3D framework possessing high surface area, high porosity with enhanced ionic conductivity is proposed as an ideal choice. When paired with alkali metal anodes, carbonaceous anodes exhibit optimal performances at room temperature, whereas low and high-temperature operation adversely affect battery performances. At low temperatures, the plating of alkali metal anodes becomes a significant concern causing higher SEI resistance, resulting in metal plating and subsequent dendrite formation at high current densities due to the increased polarization. On the other hand, at elevated temperatures, the SEI layer is prone to ageing induced by uncontrolled growth, compositional change, and migration of polysulphide species, leading to higher internal resistance and irreversible loss of alkali metal anodes. In due course, the decomposition of the SEI layer will lead to thermal runaway. A better carbon host for the superior plating/stripping of alkali metal anodes with unique behavior, structures, and morphologies is predicted down the road.

For alkali metal anodes, in addition to dendrite growth, the volume change during battery operation is infinite (theoretically) and fatal to destroy the SEI. The strategies mentioned above: (i) introduction of electrolyte additives to stabilize SEI; (ii) engineering high-modulus solid electrolytes to rule out the dendritic penetration and short-circuit and (iii) designing stable artificial solid electrolyte interfaces (SEI) to suppress dendritic growth are effective to a certain extent. However, none of them is capable of addressing the infinite volume change caused by the 'hostless' Li plating/stripping. The volume change of alkali metal anodes depends on their molar mass, density, and functional packing density. Calculated volumes per mole for Na and K metal are nearly 2 and 4 times higher than metallic lithium. Larger volumes per mole for Na and K indicate that Na and K anodes suffer significantly higher volume change than metallic Li, leading to a more fragile and unstable SEI film resulting in instability of the batteries. The SEI for different alkali metal anodes (Li, Na and K) will behave differently based on several factors, including stability, chemical/electrochemical reactivity, mechanical properties, and the volume change during plating/stripping. Infinite volume change results in enormous internal stress, leading to potential safety hazards. Stabilization anode dimension during battery operation is a prime concern for realizing a stable and extended battery life. To address the issues that originated from the infinite volume change, rational design of a favorable 'host' supporting electrodeposition of alkali metal is essential. Several carbon-based materials, including carbon nanotubes, graphene, and mesoporous carbon, etc., are the ideal host candidates for plating/stripping alkali metal anode. Moreover, carbon materials are mostly stable under the redox battery environment.

Preferably the PAN is functionalized with sulfur or metallic groups to enable bond creation with lithium, so the anode can store it. It is preferred for the mats to present a gradient of sulfur and metallic group incorporation from top to bottom. Where the side of the anode facing the current collector preferably exhibits a higher amount or even excess of sulfur seeds or metallic atoms than the mats located next to the electrolyte. In particular, the rear part of the anode comprises 10 times more sulfur seeds compared to the part/mats next to the electrolyte. This gradient has two goals: The first one is to prevent the formation of lithium dendrites that are detrimental to the lifetime and efficiency of a battery. Because of the low concentration of nucleation points for lithium at the SEI or close to it, lithium will not be able to aggregate and form these characteristic tree-like structures of crystallized dendrites. On the other hand, this low concentration of lithiophilic groups at the solid electrolyte interphase will limit the obstruction of the porous surface by lithium atoms. This will thus allow the whole monolithic structure to carry lithium more efficiently. Different ways are suitable to solve this task: For the metallic doping of PAN, it could be done in a one-pot reaction in which different concentrations of metallic precursors are added during the electro-spinning process. This step could afford the synthesis of a monolithic PAN containing several metallic seeds heterogeneously spread. Adding sulfur groups could be achieved by immersing the whole structure in a solution of sulfur dissolved in hydrocarbon, itself in contact with molten sulfur. The contact between the hydrocarbon sulfur solution and the molten sulfur will create a sulfur gradient of concentration and allow the heterogeneous sulfurization of the monolithic PAN structure.

The present invention may relate in particular to an advanced negative electrode - anode - e.g. for an alkali-ion or alkali earth-ion sulfur battery and battery having the same, and, more particularly, to a lithium-sulfur secondary battery exhibiting a monolithic self-supported structure and more specifically, to a method of producing the same monolithic anode made out of sulfurized polyacrylonitrile (SPAN), which exhibits nucleation points for the good alkali-ion or alkali earth-ion plating/stripping, and more specifically, to a method of producing the same 3D monolith sulfurized PAN including reduced graphene oxide through microwave pulse radiation.

In certain embodiments, the anode active material may consist of alkali-metal(s) as a source of suitable cations as charge carriers such as Li/Li⁺ lithium and/or Na/Na⁺ sodium and/or K /K⁺ potassium and/or alkaline earth-metal like calcium Ca/Ca²⁺ and/or magnesium Mg/Mg²⁺ metal(s) and/or metal-ion insertion and/or alloying or intercalation compounds.

In the drawings, the following is depicted:
**Figure 1.** a) Square-shaped monolith and b) preferable interlacing of the PAN fibers within the square-shaped monolith. Current collector foil 1 and exemplary Layers I, II, X
**Figure 2.** a) Hexagonal shaped monolith and b) preferable interlacing of the PAN fibers within the hexagonal shaped monolith. Current collector foil 1 and exemplary Layers I, II, III, X
**Figure 3****.** Working principle of the electrophoresis bipolar cell for the deposition of metal decorated GO. EDP & reduction electrochemical bipolar cell. Monolithic host 2 with a density gradient 3, anode pole 4, and cathode pole 5.
**Figure 4****.** Gradient of concentration of the deposited metal decorated rGO
**Figure 5****.** Schema of the microwave reacting chamber for the implementation of sulfur within the monolithic PAN body. Microwave chamber 6, Pan fabric immersion 7, Low density-alkane solvent top layer 8, transition zone saturated sulfur 9, and high density melt sulfur bottom 10.1
**Figure 6****.** a first embodiment of a battery with the inventive anode. Monolithic cathode body 12, monolithic anode body 13, positive electrode with separator 14. Negative electrode 15, assembled single mono-polar electrode pair 16.
**Figure** 7. a second embodiment of a battery with the inventive anode. Monolithic cathode body 17, monolithic anode body 18, negative electrode 19. positive electrode 20, assembled single bi-polar electrode pair 21.

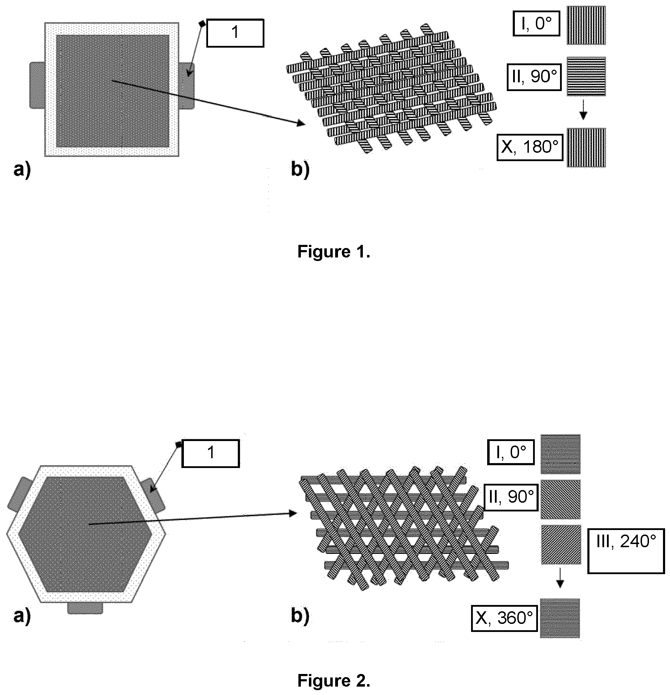

In particular, within the scope of embodiments of the present invention, an alkali metal and/or a divalent alkaline earth-metal may be used as suitable metal anode materials for a composite metal-sulfur battery, or another kind of batteries where a metal anode can be suitable, and in which the active anode material is hosted by supporting structures presenting anisotropic properties as shown in Fig. 1, while preserving a monolithic 3D structure. The host structure is preferably prepared by stacking of 3 - 200 mats or more and more preferably 80 mats of interlaced carbonized polyacrylonitrile (PAN) fibers. The carbonized PAN fibers may be twisted and interlaced between 15° to 120°, more preferably 90° for a square-shaped electrode (Fig. 1) or 120° for a hexagonal-shaped electrode (Fig. 2). The fibers of each mat are aligned parallelly to the substrate where they are deposited, whereby the substrate can be the current collector. The porosity of the resulting monolithic body is defined by the void where the PAN fibers are not present. The porosity can be defined by Helium pycnometry, where the sample is enclosed in a closed vessel of a fixed volume at a fixed pressure. Through this technique, the porosity is defined as the volume displacement between the empty vessel and the one containing the sample. The morphology of the porous network can also be determined by physical gas adsorption or computed tomography. The side of the monolithic host structure having the highest density, i.e., the lower porosity should face towards the current collector foil.

Another preferred aspect of the invention is the presence of one and/or several metal/s within the PAN network to act as nucleation points for the monovalent alkali metal and/or the divalent alkaline earth-metal. The metal/s should have a low over-potential of reaction with the monovalent and/or the divalent alkaline earth-metal to trigger the nucleation. Such metals should be able to form an alloy with the monovalent alkali metal and/or the divalent alkaline earth-metal such as Ag and/or Au and/or Zn and/or Si and/or otherwise specified as lithiophilic, and/or specified as an inactive lithiophobic metals such as Ni and/or C and/or Cu and/or Fe and/or as lithiophilic oxides and/or nitrides and/or sulfides such as ZnO and/or Ni₃N and/or Li₂S, respectively, and/or heteroatoms such as sulfur more preferably for the case of a lithium battery system. The metal/s can be introduced directly during the preparation or the PAN fibers (during the polymerization, or oxidative stabilization), or after preparation by impregnation, by chemical grafting, or more preferably by electrophoresis deposition, and/or even more preferably by sulfurization in the case of sulfur, where the material is called sulfurized-PAN (SPAN).

Electrophoresis methods can also be used for the deposition of objects already decorated with metal species onto the PAN fibers. For electrophoresis deposition processes, the media to support the metal species is more preferably graphene oxide sheets decorated with a thin layer of metal and/or metal nanoparticles explicated in the previous paragraph.

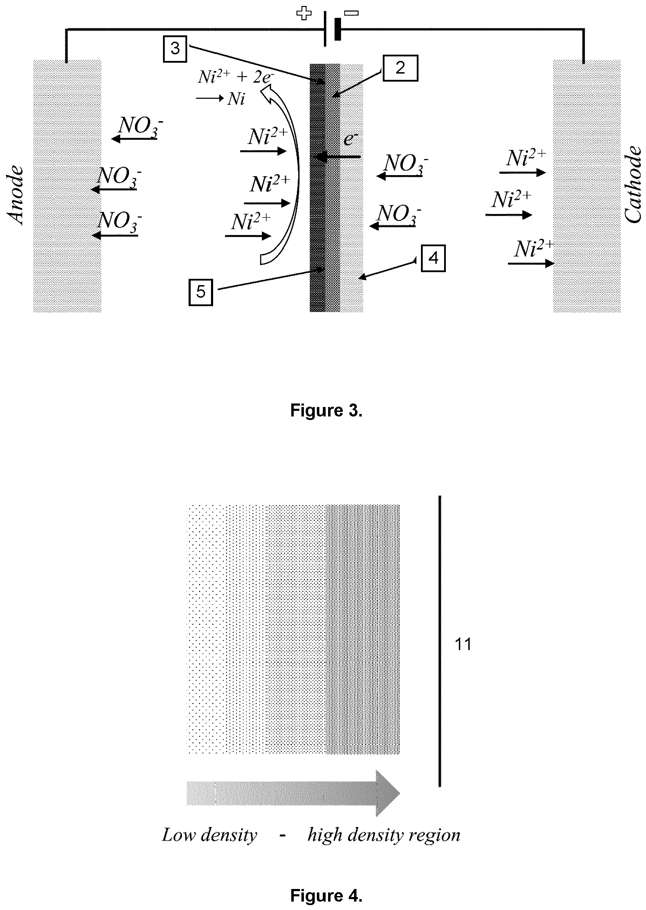

The graphene oxide (GO) decorated with metal nanoparticles and/or a thin metal layer may be deposited and reduced onto the monolithic host structure by electrophoresis manipulation within a bipolar electrochemical cell (Fig. 3). During this process, the monolithic host structure may be charged negatively by a wireless process. The GO should present the appropriate metal in order to support the suitable charge, which will influence the deposition.

The decorated GO will be reduced at the surface of the monolithic host structure. The gradient distribution of metal or sulfur decorated reduced graphene oxide (rGO) is provided by electrophoretic deposition and depends on the metal nanoparticles and/or the thin metal layer decoration. The density gradient of rGO would increase towards the top of the monolithic host structure and decrease in direction to the inside of the monolithic host structure (e.g. SPAN).

Anisotropic properties of such a host structure for monovalent alkali metals and/or divalent alkaline earth-metals are advantageous for obtaining a specific buffering space to accommodate the internal volume changes that occurred upon the deposition/departure of the monovalent alkali metal and/or the divalent alkaline earth-metal on/from the host electrode and to provide a stable interface between the anode and the separator. Anisotropic volume expansion is an advantageous aspect of the invention, for which misbalanced volume changes can block the diffusion pathway of the charge carrier, i.e. clogging the porosity of the host electrode.

Such phenomena can be observed for common Li-ion cathodes such as LFP, LCO, NMC, NCA, in which the porosity network of the electrode film can be blocked upon the expansion of the crystal structure during the reaction with lithium. In pure metal anodes, i.e. lithium, sodium, or potassium, the absence of porosity creates huge deformation along one direction and the possibility of dendrite generation.

An anisotropic gradient present in the monolithic host structures will provide some additional space to buffer the structural changes, avoid the clogging of the porosity and the formation of dendrites during the reversible alkali-metal and/or divalent alkaline earth-metal plating/stripping (Fig. 4). 11 = facing towards the current collector foil. This aspect will be also beneficial for the optional solid-liquid interface, preferably present between the alkali metal and/or the divalent alkaline earth-metal and the electrolyte-filled separator.

This may therefore provide high coulombic efficiency and consequently higher cycle life as well as less irreversible decomposition of electrolyte for the whole system. Additionally, a smaller loss of inactive alkali metal and/or divalent alkaline earth-metal may be obtained due to the positive effect of the dimensionally stabilized anode due to the absence of dendrite formation.

In the scope of a preferred embodiment of the present invention, a method to produce a carbon-based anisotropic alkali metal and/or divalent alkaline earth-metal gradient host structure e.g. by an ex-situ method while being self-supported is provided: The self-supported heterogeneous carbon-based wafer host structure, i.e. the PAN structure, can accommodate alkali metals and/or divalent metals and buffers the volume fluctuation during the cycling processes, i.e. nucleation, plating, and stripping of an alkali metal and/or a divalent metal and where the stripping of the alkali metal and/or divalent alkaline earth-metal results in the decrease of the anode thickness upon discharge.

To produce SPAN according to a preferred embodiment of the present invention as it may be used as a host anode for alkali-metals or divalent metals in a cost- and time-effective method, an innovative microwave-induced flash sulfurization preparation method of the PAN monolithic host structure may be provided. The processing solvent for the direct immersion of this monolith/PAN body is preferably able to solubilize sulfur with more than 5% per volume of the solvent which preferably has a boiling point between 280°C and 600°C. Additionally, the suitable processing solvent is preferably transparent to microwave irradiations, i.e., having a relative permittivity εᵣ less than e.g. 8 to support the efficient transmission of the microwave energy to the reactants.

Saturated hydrocarbons, such as n-alkanes with boiling points starting from 280°C, such as Hexadecane C₁₆H₃₄ (bp. 287 °C) up to Tetrapentacontane C₅₄H₁₁₀ (bp. 596 °C) are suitable for this application. The volume of polyacrylonitrile to be treated and the volume of the processing solvent including dissolved sulfur is preferably between 1:5 to 1:50 and more preferably 1:20. A large excess of processing solvent is preferably used to stabilize polyacrylonitrile during the sulfurization process since the microwave flash process can be harmful to the monolithic host structure.

The solvent excess is useful to cool down the SPAN after microwave treatment and to provide a sufficient amount of sulfur for the sulfurization process. Ultra-fast microwave flash pulses govern the heat-induced degradation of the polyacrylonitrile and are preferably carried out by ramp rates included between 50° - 200° C/min and more preferably 150°C/min. In comparison with usual methods which use expensive inert gases, such as argon, the preparation of SPAN in hydrocarbon by microwave flash pulse treatment decreases costs and reaction time, as well as being more environmentally friendly.

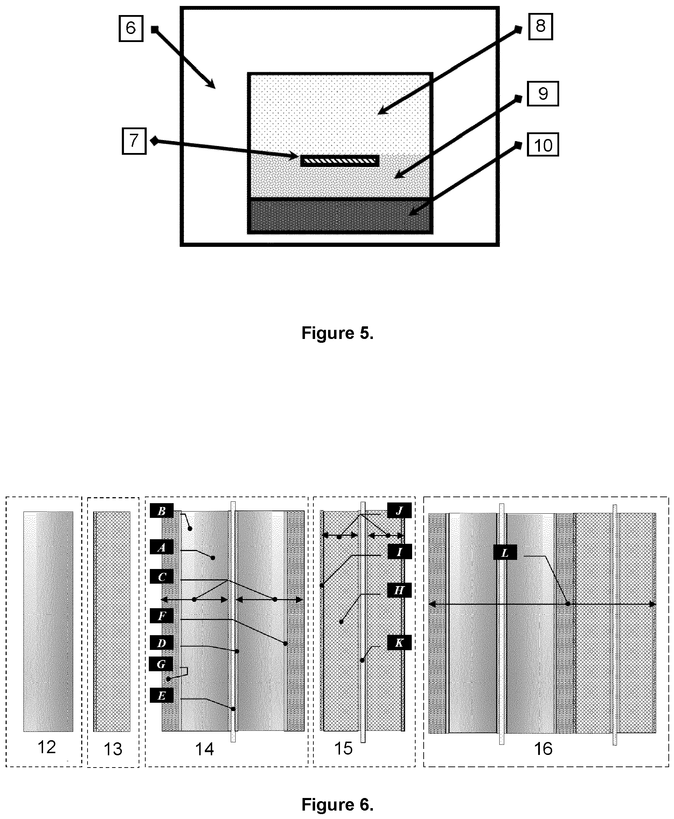

The relative permittivity of the three components of the sulfurization is low enough to allow for an efficient microwave treatment (sulfur: εᵣ = 3.5 at 25°; PAN: εᵣ = 3.2 at 25°C (can be increased up to εᵣ = 5 by the incorporation of 2% wt. MWCNT); hexadecane: εᵣ = 2.0 at 25°C). Furthermore, due to the density difference of sulfur and hexadecane (1.66 g/cm³ and 0.77 g/cm³ respectively), the reaction media according to this preferred method is designed in a way that a layer of molten sulfur is present in the bottom of the microwave reactor, and preferably with a layer of saturated n-alkane on the top of the microwave reactor (Fig. 5). In between those two layers, a zone called "transition zone saturated sulfur" may be present, where sulfur is saturated in solution and where the PAN monolith may be immersed. The "transition zone saturated sulfur" will provide an excess of sulfur relative to the PAN, and thus enhance the sulfurization. The excess of sulfur is provided by the molten sulfur bottom layer all along the microwave treatment. The molten sulfur bottom layer could be re-supplied at the end of each process by an external source. Additionally, the "transition zone saturated sulfur" offers a protective layer to avoid direct contact between the PAN monolith and the melted sulfur.

According to a preferred aspect of this invention, an environmentally friendly, slurry free electrode manufacturing method is provided, in which the production of a self-supported monolithic host structure may be created by a binder-and-slurry-free method in such a way that preferably all (except unavoidable losses) precursors and materials used during production are becoming building blocks of the final sulfur cathode.

An advantageous aspect of the invention may be the process of forming lithium seed sites within the SPAN network. These lithium seed sites will be lithiophilic and will act as nucleation points for the monovalent alkali metal and/or a divalent alkaline earth-metal and will support the homogenous plating of the latter within the monolithic host anode. Thus, avoiding the formation of dendrites, which can be harmful for the battery operation.

Alkali metal and/or a divalent alkaline earth-metal SPAN host anode may be based on the reduction of - Sₙ - chains, preferably covalently bonded onto the e.g., cyclized and/or partially dehydrogenated poly-acrylonitrile backbones, whereby preferably the most dominant embedded/ (covalently) bonded sulfur chains above 400°C are short - S₂ - and - S₃ - chains. Preferably the fixated sulfur is covalently bonded and non polymeric. More preferable the sulfur is provided in the form of sulfur chains of a few sulfur atoms (S₂, S₃, ...) The length of those chains must be suitable for the good retention of the initial material. SPAN with long - Sₙ - chain, such as - S₃₊ₓ -, are prone to release sulfur in its elemental form and/or as soluble polysulfides. Therefore, preferably short-chain - Sₙ -, namely - S₂ - and - S₃ - chains, are capable to be discharged and charged entirely through a solid-to-solid phase transition. Hereby, the nucleation points for an efficient monovalent alkali metal and/or a divalent alkaline earth-metal plating/stripping are preferably formed on SPAN, as a result of the irreversible reaction between the monovalent alkali metal and/or the divalent alkaline earth-metal, more preferably lithium, and C=N bonds upon the first activation. By trapping Li⁺ within the conjugated polymer backbone, the conductivity of the resulting S-PAN-Li anode may further be enhanced. The final porosity of the monolithic PAN body consists of the empty area prior battery assembly after drying of the final electrode material, i.e., the area where no solid material is present within the final monolithic PAN body. This value is accessible through BET measurement.

Another aspect of the impact of the anisotropy within the monolithic host structure is the change of conductivity of the monolithic host structure depending on the lithiation of the nucleation points all across the polymer backbone, which may at a first stage occur at the bottom of the monolithic host structure, i.e. the face towards the current collector foil. This may create an electrical anisotropy along the thickness of the monolithic host structure, with a higher conductivity at the bottom of the monolithic host structure, i.e. the face towards the current collector foil. The electrical conductivity may thus increase from the bottom to the top upon lithium reduction, which means that the top of the monolithic host structure anode may become less conductive than the bottom. This may lower the risk of dendrites formation because the lithium plating takes place at the most electrically conductive part of the electrode due to the higher concentration of electron/ion exchange sites, i.e. the bottom of the electrode. This self-mediated plating based on the redistribution of electronic conductivity within the anode compartment is a preferred aspect of the present invention, especially regarding the commercial acceptance for an alkali-metal or a divalent metal anode with an excess, defined here as ≤ 200%.

Furthermore, the sulfurization of the monolithic host structure may significantly change the electronic conductivity from an insulating PAN 10⁻¹² S/cm to semiconductive SPAN 10⁻⁴ S/cm. This opens the pathway for the use of SPAN-Li as a monolithic anode capable to provide a host structure for the accommodation of a monovalent alkali metal and/or a divalent metal within its external (SPAN).

Another preferred aspect of the invention may be the ability of the monolithic host structure to undergo uniform confinement of a monovalent alkali metal and/or a divalent alkaline earth-metal with a volume/thickness change of ≤ 30%. The monovalent alkali metal and/or the divalent alkaline earth-metal should represent between 52 to 90 wt.% and more preferably 78 wt.% of the total anode weight after a full charge. The monolithic host structure may have a high degree of alignment (≥ 80%) provided by a stack of at least ≥ 3 mats of aligned/interlaced PAN/SPAN fibers, which represent 10% to 48% and more preferably 22 wt.% including rGO decorated with metal species as nucleation points, as described previously.

According to the present invention a negative alkali metal or alkaline earth metal electrode may be provided with a porous anode body adapted to host active alkali or earth alkali material, wherein the host structure contains sulfur/sulfur seeds as a, preferably non-exclusive, binding mediator for the alkali or earth alkali active material within the porous structure. The structure may comprise or may be made from PAN polymer. A sulfur distribution is preferably provided within the porous structure of the anode body. Perpendicular to the concentration gradient the sulfur/sulfur seed distribution may be about uniform.

The sulfur distribution may be such that between two opposite side of the anode body the concentration of sulfur/sulfur seeds within the porosity of the anode body is successively decreasing/increasing from one side to the other (gradient).

Preferably the anode is shaped such that one of those sides is adapted to be directed to a current collector foil in a final battery containing the anode.

Thus, a face/side of the negative anode (monolithic body) facing its current collector entity (e.g. foil) in an according battery arrangement, may contain the highest concentration of sulfur and/or the opposite side of the negative anode the lowest concentration of sulfur seeds (or the other way around).

All statements with respect to an anode according to claim 1, especially the content of the depending claims also applies to the anode with a sulfur distribution as outlined above.

The electrochemical behavior of the SPAN anode should be described as follow. First, the monovalent alkali metal and/or the divalent alkaline earth-metal of the battery system reacts by conversion reaction with the sulfur nucleation point, followed by an intercalation reaction of this/these monovalent alkali and/or divalent metal within the graphitized network of the PAN fibers, and at last a plating reaction relative to the plating of this/these monovalent alkali and/or divalent metal at the nucleation points of the monolithic host structure created by the heteroatoms, but mainly due to the Li₂S species generated by the conversion reaction in the case of lithium system.

Below in the figures, there are two examples for preferred embodiments of the present invention comprising the inventive host anode.

A battery (fig. 6) comprising the inventive anode may have the following setup:
A. Primary positive mass - main cathode exhibiting heterogeneous monolithic body consisting of sulfur nanotubes as a building block -for which the cathode is having shape and size-matched to the net shape of current collector foil including conductive additives and binders
B. Secondary positive mass - supporting sulfur cathode mass intergrowth within the main body of the monolithic sulfur wafer
C. Monolithic sulfur wafer - assembled cathode
D. Electro-conductive adhesive layer with thickness ≤ 10 µm and more preferable 6 µm exhibiting patterned surface
E. Cathode current collector foil with thickness between 8 - 20 µm and more preferable 12 µm
F. Intermediate cathode/separator transition layer with thickness between 2 - 10 µm and more preferable 5 µm
G. Cathode supported non-detachable separator layer with thickness between 8 - 25 µm and more preferable 14 µm
H. Negative active mass - anode including an alkali-metal monolithic host structure based on graphitized PAN containing nucleation point for reversible plating & stripping of alkali metal
I. Anode to separator transition layer with thickness between 2 - 10 µm and more preferable 5 µm including a negative active material having a 2D structure
J. Monolithic host structure
K. Alkali metal host body - assembled anode
L. Anode current collector foil

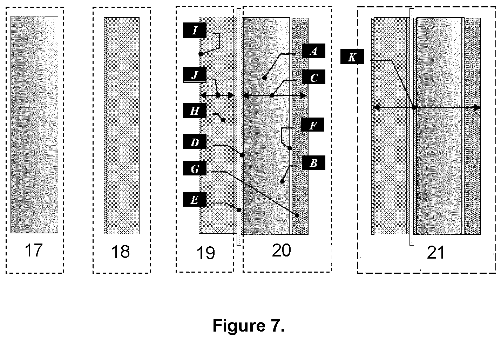

According to another preferred embodiment (fig. 7), a battery comprising the inventive anode may have the following setup:
A. Primary positive mass - main cathode exhibiting heterogeneous monolithic body consisting from sulfur nanotubes as a building block -where the cathode is having shape and size matched to the net shape of current collector foil including conductive additives and binders
B. Secondary positive mass - supporting sulfur cathode mass intergrowth within the main body of the monolithic sulfur wafer
C. Monolithic sulfur- assembled cathode
D. Electro-conductive adhesive layer with thickness ≤ 10 µm and more preferable 6 µm where exhibiting patterned surface
E. Bipolar current collector foil with thickness between 8 - 20 µm and more preferable 12 µm
F. Intermediate cathode/separator transition layer with thickness between 2 - 10 µm and more preferable 5 µm
G. Cathode supported non-detachable separator layer with thickness between 8 - 25 µm and more preferable 14 µm
M. Negative active mass - anode including an alkali-metal monolithic host structure based on graphitized PAN containing nucleation point for reversible plating & stripping of alkali metal
H. Anode to separator transition layer with thickness between 2 - 10 µm and more preferable 5 µm including a negative active material having a 2D structure
I. Monolithic carbonaceous alkali metal host body - assembled anode
J. Assembled bipolar electrode pair - single bipolar cell.

## Claims

1. Negative alkali metal or alkaline earth metal electrode - in the form of a monolithic anode body having a stacking of 3 - 200 mats, preferably 80 mats, of interlaced carbonized polyacrylonitrile (PAN) fibers as a host structure for the alkali metal or alkaline earth metal active material.

2. Negative anode according to claim 1
**characterized in that**
the PAN fibers of each mat are twisted and interlaced between 15° to 120°, more preferably 90°, for square shape electrodes or by 120° for hexagonal shaped electrodes.

3. Negative anode according to claim 2
**characterized in that**
the monolithic anode body of PAN fiber mats comprises a, preferably covalently bound, sulfur seed distribution, preferably of small chains - S₂ or S₃ wherein the sulfur content is preferably between 10 wt.% to 40 wt.%, and most preferably 12 wt.% of the monolithic body.

4. Negative anode according to any preceding claims
**characterized in that**
a porosity, namely the porosity of the monolithic host structure, thus the monolithic body, is between 30% and 80%, preferably 70%.

5. Negative anode according to claims 2 to 4
**characterized in that**
the monolithic body of PAN fiber mats comprises a gradient of concentration of sulfur seeds along the anode's thickness,

6. Negative anode according to claims 2 to 5
**characterized in that**
the face of the negative anode/monolithic body facing its current collector entity in an according battery arrangement contains the highest concentration of sulfur and/or the opposite side of the negative anode the lowest concentration of sulfur seeds.

7. Lithium-sulfur electrochemical battery, comprising:
A positive electrode,
A negative electrode according to claims 1 to 6,
A current collector entity for collecting current from the negative electrode
A separator supported by the anode and
An electrolyte.

8. Alkali-ion battery according to claim 7,
**characterized in that** the monolithic body of PAN fiber mats comprises ≥ 80 wt.% and more preferably 88% wt.% of partially graphitized PAN, thus non-sulfurized PAN, whereby while exhibiting structurally self-supporting properties.
